# EUROPEAN PATENT SPECIFICATION

(11) **EP 2 294 926 B1**
(45) Date of publication and mention of the grant of the patent: **19.11.2014**
(21) Application number: 09773158.2
(22) Date of filing: 29.06.2009
(51) Int. Cl.: A23C 9/127, A23C 9/123

(54) **PROCESS FOR PRODUCING FERMENTED MILK**
HERSTELLUNGSVERFAHREN FÜR SAUERMILCH
PROCÉDÉ DE PRODUCTION DE LAIT FERMENTÉ

(30) Priority: 30.06.2008 JP 2008170245
(43) Date of publication of application: 16.03.2011
(73) Proprietor: Meiji Co., Ltd., Tokyo (JP)
(72) Inventor: FUKUI, Munenori, Odawara-shi Kanagawa 250-0862 (JP); RYUU, Ana, Odawara-shi Kanagawa 250-0862 (JP)
(74) Representative: Care, Alison
(86) International application number: PCT/JP2009/002992
(87) International publication number: WO 2010/001580

(56) References cited:
- EP-A1- 1 273 237
- JP-A- 4 211 360
- JP-A- 4 287 636
- JP-T- 8 503 140
- US-A- 5 409 718
- US-A- 5 445 835
- US-A- 5 716 811
- YASUSHI KAWAI ET AL.: 'Bacteriocin to Biopreservation' BULLETIN OF JAPAN DAIRY TECHNICAL ASSOCIATION vol. 53, 2003, pages 77 - 89, XP008138781
- JOHN FRY: 'Dairy finds new bacterial inhibitor' FOOD PROCESSING vol. 61, no. 9, 2000, page 78, 80, XP008138779
- N. BENKERROUM ET AL.: 'Behaviour of Listeria monocytogenes and Staphylococcus aureus in Yogurt Fermented with a Bacteriocin-Producing Thermophilic Starter' J. FOOD PROT. vol. 65, no. 5, 2002, pages 799 - 805, XP008138780
- TADAO SAITO ET AL.: 'Kokinsei Peptide : Nyusankin no Seisan suru Bacteriocin no Tokucho to sono Riyo (sono 1)' BULLETIN OF JAPAN DAIRY TECHNICAL ASSOCIATION vol. 47, 1997, pages 90 - 100, XP008138782

## Description

### Technical Field

The present invention relates to a method for manufacturing fermented milk using bacteriocin-producing lactic acid bacteria, wherein the increase of acidity in fermented milk during transportation and storage can be effectively restricted by bacteriocin from the bacteria through deactivating the cause of the increase and also the fermented milk with a good flavor can be obtained by killing the bacteria productive of bad smells after they have produced bacteriocin in the fermented milk.

### Background Art

Continuous production of acids from a starter bacterium during transportation and storage of fermented milk can be observed. This causes a problem that a sour taste of fermented milk increases with an increase of its acidity. Meanwhile, bacteriocin, antibacterial substances such as nisin and lactococcin, in known which is produced by lactic acid bacteria ("Antibacterial Peptides: Characteristics and Usage of Bacteriocin Produced by Lactic Acid Bacteria and Their Application", Tadao SAITO, et al., Nyu-Gyo Zasshi, pp. 90-100, vol. 47, 1997, Japan Dairy Technology Association.). The ability of a starter to produce acids decreases in the presence of bacteriocin, which restricts the increase of acidity in fermented milk during transportation and storage. In Japan, however, the addition of bacteriocin to food products is illegal.

JP1992-211360A (Patent Document 1 listed below) discloses a method for manufacturing fermented milk, wherein fresh cells of bacteriocin-producing *Streptococcus thermophilus* were inoculated into a yoghurt mix for its fermentation and formation of bacteriocin. Yoghurt manufactured according to this method contains bacteriocin and therefore an increase of the acidity during transportation and storage can be restricted.

JP1992-287636A (Patent Document 2 listed below) discloses a method for manufacturing fermented milk, wherein fresh cells of bacteriocin-producing *Lactococcus lactis* were inoculated into a yoghurt mix for its fermentation and formation of bacteriocin. Yoghurt manufactured according to this method contains bacteriocin and therefore an increase of the acidity during transportation and storage can be restricted.

US5409718 discloses a method of preparing a fermented milk product wherein the milk is incubated with a thermophilic *Lactobacillus,* which is then destroyed by heat. Finally, a culture of *Streptococcus* is inoculated into the suspension of destroyed *Lactobacillus.*

US5445835 discloses a method for producing a yogurt product containing a bacteriocin. A milk based medium is cultured with *Pediococcus acidilactici* to produce the bacteriocin. The *Pediococcus acidilactici* is then heat inactivated and finally a yogurt culture is added to the medium with the bacteriocin and cultured to produce the yogurt product.

US5716811 discloses a method for retaining the antimicrobial activity of the byproducts of growth of microorganisms during storage. A pasteurized low fat or skim milk substrate is inoculated with an *S. lactis* culture and fermented to cause growth of the culture and the release of metabolic byproducts, including nisin. The fermented substrate is loaded into a container which is flushed with a quantity of an inert gas. A small amount of a CO₂ producing chemical is mixed into the fermented substrate which stabilises the antimicrobial activity of the cultured substrate and aids in the release of nisin from the cells produced during fermentation of the substrate.

JP8503140T discloses a method of manufacturing fermented milk comprising adding *Streptococcus thermophilus* to a yogurt mix.

However, lactic acid bacteria which produce bacteriocin are the same as the ones used in the cheese manufacture. The usage of these bacteria in the yoghurt manufacture, therefore, causes a problem that the yoghurt flavor deteriorates and the cheese-like flavor increases. In addition, the variety of tastes and properties of yoghurt can be less freely arranged if bacteriocin-producing bacteria serve as the starter lactic acid bacteria as well as the bacteriocin producer.

### Patent Document

Patent Document 1: JP1992-211360A
Patent Document 2: JP1992-287636A

### Non Patent Document

Non Patent Document 1: "Antibacterial Peptides: Characteristics of Bacteriocin Produced by Lactic Acid Bacteria and Their Application", Tadao SAITO, et al., Nyu-Gyo Zasshi, pp. 90-100, vol 47, 1997, Japan Dairy Technology Association.

### Disclosure of Invention

### Technical Problem

The purpose of the present invention is to offer a method by which an increase of the acidity in fermented milk during transportation and storage can be effectively restricted and the manufacture of fermented milk with a good flavor is attained.

### Technical Solution

In this invention, bacteriocin-producing lactic acid bacteria and/or cultures or fermentation products thereof are added to a yoghurt mix. Thereafter in the manufacturing process of bacteriocin, the bacteriocin-producing lactic acid bacteria added are killed. Lactic acid bacteria different from the bacteriocin-producing lactic acid bacteria are then inoculated. It is thus possible to provide bacteriocin, not in the form of bacteriocin itself, to yoghurt as a starter. With bacteriocin-producing lactic acid bacteria being killed, an increase of the cheese-like flavor can be restricted and because of this, manufacture of fermented milk with a good flavor is possible.

The invention provides a method for manufacturing fermented milk comprising: a step of adding (i) a first bacteria; (ii) cultures of the bacteria; (iii) the first bacteria and cultures of the bacteria; or (iv) the first bacteria and fermentation products of the bacteria to a yoghurt mix; a subsequent step of killing the first bacteria; a step of adding a starter to the yoghurt mix containing the first bacteria which have been killed; and a step of fermenting the yoghurt mix to which the starter has been added, wherein the first bacteria is bacteriocin-producing lactic acid bacteria in genus *Lactococcus,* and wherein the step of killing the first bacteria is a step of heating the yogurt mix at from 85-97°C for 2-10 minutes or at from 100-140°C for 1 second to 1 minute.

In the method of the invention, lactic acid bacteria and/or cultures or fermentation products thereof are added to a yoghurt mix. Here, the lactic acid bacteria are bacteriocin-producing ones. The bacteriocin-producing lactic acid bacteria added are killed after producing bactericion in the yoghurt mix. These processes restrict an increase of the cheese-like flavor derived from the presence of bacteriocin-producing lactic acid bacteria. On the other hand, the fermentation does not proceed by the dead lactic acid bacterial cells alone. To solve this problem, a starter is inoculated into a yoghurt mix in which the bacteriocin-producing lactic acid bacteria have been killed, and then the yoghurt mix with the starter is fermented. The yoghurt mix thus prepared contains bacteriocin and the starter accelerates the fermentation, and consequently fermented milk with a good flavor can be obtained.

The preferable pattern in the method for manufacturing fermented milk in this invention relates to the one designed to contain the de-oxygen treatment of the yoghurt mix between the ones to kill bacteriocin-producing lactic acid bacteria and to ferment the yoghurt mix. By the de-oxygen treatment, as shown in Examples, the activity of starters is enhanced and the time required for fermentation is shortened. Thus, the method of the invention may include a step of de-oxygen treatment of the yogurt mix between the step of killing the first bacteria and the step of fermenting the yogurt mix.

The preferable pattern in the method for manufacturing fermented milk in this invention relates to the one designed to maintain the acidity (pH) of the yoghurt mix into which bacteriocin-producing lactic acid bacteria are inoculated to be pH 6.5 - 7.5. The acidity in the yogurt mix to which the first bacterian are added may be pH 6.5-7.5. The inventors of this invention revealed that the increase of acidity in fermented milk did not cease by an addition of bacteriocin to it once it became acidic. The manufacturing method of this pattern can be a combination of any patterns of the manufacturing processes described above.

The preferable pattern in the method for manufacturing fermented milk in this invention relates to the one designed to employ lactic acid bacteria in the genus *Lactococcus* as the bacteriocin-producing lactic acid bacteria. Some examples of bacteria in this genus are *L. lactis* and *L. cremoris*. Thus, the first bacteria may be *Lactococcus lactis* or *Lactococcus lactis* subsp. *cremoris*. Concretely, bacteriocin-producing lactic acid bacteria here are the ones with the deposit number "FERM BP-10966" or "FERM BP-10967" deposited in International Patent Organism Depositary, Advanced Industrial Science and Technology. As demonstrated in Examples, these bacterial strains restrict the increase of acidity in fermented milk and produce bacteriocin which do not spoil the flavor. The manufacturing method of this pattern can be a combination of any patterns of the manufacturing processes described above.

The preferable pattern in the method for manufacturing fermented milk in this invention is the one designed to employ nisin or lactococcin as the bacteriocin. Lactic acid bacteria which produce nisin are widely known (e.g., *L. lactis*)*.* The ones to produce lactococcin are also widely known (e.g., *L. cremoris*)*.* Therefore, those known bacteria which produce nisin or lactococcinn can be applied to this invention. The manufacturing method of this pattern can be a combination of any patterns of the manufacturing processes described above.

The preferable pattern in the method for manufacturing fermented milk in this invention is the one designed to use *Lactobacillus delbrueckii* subsp. *bulgaricus, Lactobacillus helveticus,* or *Lactobacillus acidophilus,* as a main component of the starter. The acidity in fermented milk increases during transportation and storage, with *Lactobacillus delbrueckii* subsp. *bulgaricus, Lactobacillus helveticus,* or *Lactobacillus acidophilus* being used as a starter. Therefore, the manufacturing method of fermented milk in this invention can be effectively employed particularly when these bacterial strains are used as a starter. *Lactobacillus delbrueckii* subsp. *lactis* can also be used as the main starter bacterial strain. The manufacturing method of this pattern can be a combination of any patterns of the manufacturing processes described above. Further, the preferable pattern in the method for manufacturing fermented milk in this invention is the one designed to use *Lactobacillus delbrueckii* subsp. *bulgaricus* and *Streptococcus thermophilus* as the main bacterial strains. Namely, the acidity in fermented milk increases during transportation and storage increases, when the yoghurt mix is fermented with *Lactobacillus delbrueckii* subsp. *bulgaricus* or *Streptococcus thermophilus* used as a starter. The use of the manufacturing method in this invention leads to the effective restriction of an increase of acidity in fermented milk and offers fermented milk with a good flavor. The manufacturing method of this pattern can be a combination of any patterns of the manufacturing processes described above.

The preferable pattern in the method for manufacturing fermented milk in this invention is that the fermented milk is plain-type yoghurt. Any forms among set-type (hard-type), soft-type, or drink-type can be used but preferable one is plain-type which does not contain sweet ingredients such as sugar syrup and flavor ingredients such as sarcocarp and flavoring. Generally, plain-type yoghurt is set-type (hard-type) and the manufacturing method in this invention is preferably applicable to set-type (hard-type) yoghurt, and not to soft-type or drink-type ones. The manufacturing method of this pattern can be a combination of any patterns of the manufacturing processes described above.

Also disclosed herein is fermented milk which is manufactured according to any of the methods mentioned above. This fermented milk contains bacteriocin as an ingredient. Because of this, the increase of acidity in the fermented milk during transportation and storage can be effectively restricted. In addition, the fermented milk disclosed herein gives good flavors, because excellent lactic acid bacteria such as *Lactobacillus delbrueckii* subsp. *bulgaricus* are applicable as a starter.

### Advantageous Effects

According to this invention, the increase of acidity in fermented milk during transportation and storage can be restricted and the manufacturing method for fermented milk with a good flavor can be provided.

### Brief Description of the Drawings

[fig. 1] Figure 1 shows a flow chart representing a treatment flow of the manufacturing method of fermented milk in this invention.
[fig.2] Figure 2 shows a flow chart representing a treatment flow of the traditional manufacturing method of fermented milk.
[fig.3] Figure 3 shows a flow chart representing a treatment flow of the manufacturing method of fermented milk in this invention.

### Embodiments for Carrying Out the Invention

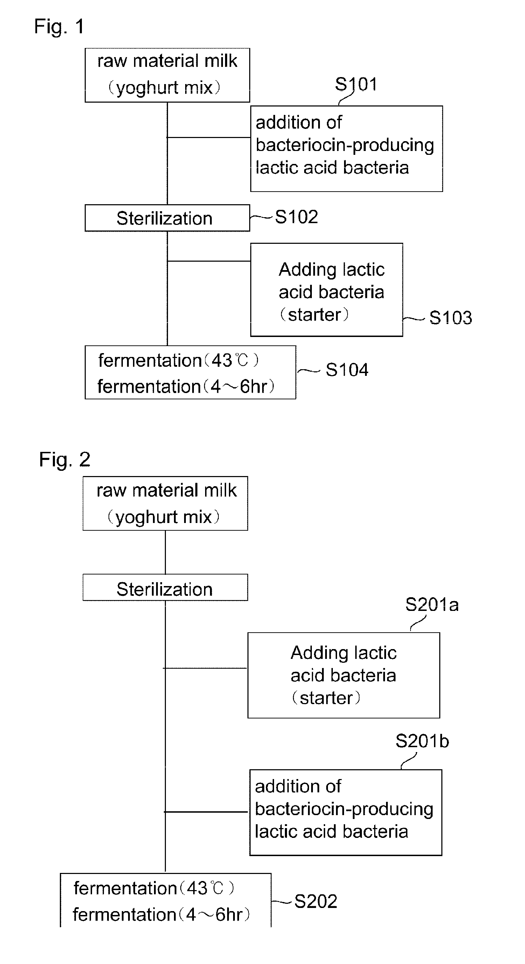

The best embodiments for carrying out the manufacturing procedures in this invention are to be described in the following. Figure 1 is an explanatory flow chart for the manufacture of fermented milk in this invention. As shown in Figure 1, basically in the manufacturing method in this invention, fermented milk is manufactured as shown in the following. The "S" in the figures represents "Step". Lactic acid bacteria and/or cultures or fermentation products thereof are added to a yoghurt mix (Step 101) (Shown as "addition of bacteriocin-producing lactic acid bacteria" in Figure 1), wherein the bacteria in S101 are bacteriocin-producing lactic acid bacteria. Here, cultures or fermentation products of the bacteria can be in a liquid or solid form. After this, the treatment to kill the bacteriocin-producing lactic acid bacteria, Sterilization, is performed (Step 102), by which an increase of the cheese-like flavor caused by the bacteriocin-producing lactic acid bacteria is ceased. Meanwhile, fermentation does not proceed by dead lactic acid bacterial cells alone. To solve this, a starter is inoculated into the yoghurt mix in which the bacteriocin-producing lactic acid bacteria have been killed (Step 103), and thereafter the yoghurt mix with a starter is fermented (Step 104). The yoghurt mix thus prepared contains bacteriocin and because the starter for fermented milk accelerates the fermentation, fermented milk with a good flavor can be obtained. Here, the bacteriocin-producing lactic acid bacteria are cultured and killed after producing bacteriocin in the culture, which then can be added to the yoghurt mix. In the subsequent processes, a starter is added to the yoghurt mix, and the resultant mixture solution is to be fermented.

In this Description, "fermented milk" can be yoghurt or any one of "fermented milk", "dairy lactic acid drink" or "lactic acid drink" defined in the Ministerial Ordinance concerning the Ingredient Standards for Milk and Dairy Products. As "fermented milk" in Description, set-type yoghurt (hard-type yoghurt, solid-type fermented milk), soft-type yoghurt (paste-type fermented milk), or drink-type yoghurt (liquid-type fermented milk) can be listed. The ones obtained by the manufacturing method in this invention are expected to be somewhat hard. Therefore, the preferable fermented milk in this invention is set-type yoghurt such as plain-type ones. Generally, plain-type yoghurt is manufactured by placing raw materials mixture in a container and subsequently fermenting it (post-fermentation). On the other hand, soft-type yoghurt and drink-type yoghurt are manufactured by mixing ingredients such as sugar syrup and sarcocarp with fermented milk and the placing their mixture in a container after atomizing and homogenizing the fermented milk (pre-fermentation). The manufacturing method of this pattern can be applied to any patterns for the manufacturing processes described above, but preferably to the manufacture by post-fermentation.

Raw materials, apparatuses, manufacturing conditions, and such for the manufacture of fermented milk are disclosed, for example, in JP2004-180526A, JP2005-176603A, JP2006-288309A, USP6025008, USP5482723, USP5096731, USP4938973, and these can be used depending on the situation.

Figure 2 is a flow chart to explain the manufacturing method for fermented milk disclosed in JP1992-287636A (Patent Document 2). As shown in Figure 2, in the manufacturing method disclosed in Patent Document 2, fermented milk is manufactured as follows. Lactic acid is added to a yogurt mix (Step 201). The bacteria here are lactic acid bacteria generally used for the manufacture of fermented milk and bacteriocin-producing lactic acid bacteria. In this Patent Document, *Lactobacillus delbrueckii* subsp. *lactis* is used as bacteriocin-producing lactic acid bacteria. Then, the yoghurt mix is fermented (Step 202). Namely, in the method disclosed in this Patent Document, bacteriocin-producing lactic acid bacteria are used together with general lactic acid bacteria. Therefore, the fermented milk contains bacteriocin. Meanwhile, by the method disclosed in this Patent Document, intact bacteriocin-producing bacteria are contained in fermented milk, due to which the fermented milk possesses a cheese-like flavor. Furthermore, it is problematic that the acidity increases with time, because the bacteriocin-producing bacteria are intact and the production of acid proceeds during transportation and storage.

In this invention, the problems above can be omitted because bacteriocin-producing lactic acid bacteria are killed in the processes, though the processes here are more complicated compared with the ones disclosed in Patent Document 2. A manufacturing method in which dead cells of bacteriocin-producing bacteria are applied is also disclosed herein.

In the following, each process is to be explained. First, the process of adding lactic acid bacteria to a yoghurt mix is to be explained (Step 101).

"Yoghurt mix", which is also called as raw material milk or fermented milk mix, is the raw material for fermented milk, such as yoghurt. In this invention, known yoghurt can be used depending on the situation. Yoghurt mix is the one both before and after being sterilized. Examples of raw materials for the yoghurt mix, concretely, are: water, raw milk, sterilized milk, non-fat milk, full-fat powdered milk, skimmed milk, butter milk, butter, cream, whey protein concentrate (WPC), whey protein isolate (WPI), α-lactalbumin, and β-lactoglobulin. Pre-heated gelatin can be added depending on the situation. Yoghurt mix is widely known and can be prepared according to known methods.

The preferable pattern in the method for manufacturing fermented milk in this invention relates to the one wherein the acidity (pH) of yoghurt mix is 6.5 - 7.5 when bacteriocin-producing lactic acid bacteria are added. The inventors of this invention revealed that the increase of acidity in fermented milk did not cease by an addition of bacteriocin to it once it became acidic. The manufacturing method of this pattern can be a combination of any patterns of the manufacturing processes described above.

The lactic acid bacteria used in the procedures are bacteriocin-producing ones.

The preferable pattern in the method for manufacturing fermented milk in this invention relates to the one designed to employ lactic acid bacteria in the genus *Lactococcus* as the bacteriocin-producing lactic acid bacteria. Some examples of bacteria in this genus are *L. lactis* and *L. cremoris.* Concretely, bacteriocin-producing lactic acid bacteria are the ones with the deposit number "FERM BP-10966 (*Lactococcus lactis* subsp. *lactis* OLS3311)" or "FERM BP-10967 (*Lactococcus lactis* subsp. *cremoris* OLS3312)" deposited in International Patent Organism Depositary, Advanced Industrial Science and Technology. As demonstrated in Examples, these bacterial strains restrict the increase of acidity in fermented milk and produce bacteriocin which do not spoil the flavor. The manufacturing method of this pattern can be a combination of any patterns of the manufacturing processes described above.

The preferable pattern in the method for manufacturing fermented milk in this invention is the one designed to employ nisin as the bacteriocin. Lactic acid bacteria which produce nisin are widely known. Therefore, known nisin-producing lactic acid bacteria can be applied to this invention. Meanwhile, the preferable pattern in the method for manufacturing fermented milk in this invention is the one designed to employ lactococcin as the bacteriocin. *L. cremoris* is widely known as one of lactic acid bacteria which produce lactococcin. Therefore, known lactococcin-producing lactic acid bacteria can be applied to this invention. Here, it is noted that some *L. cremoris* strains produce diplococcin and lactostrepcin.

Some examples of lactic acid bacteria, in this invention, which produce bacteriocin are: the ones in the genus *Lactococcus, Pediococcus, Lactobacillus, Leuconostoc, Propionibacterium, Bifidobacterium,* and *Enterococcus.* Each strain can be applied solely or a mixture of them can be also used.

Some examples of bacteriocin produced by *Lactococcus lactis* are: nisin, lacticin 481, lacticin A, and lacticin B produced by *Lactococcus lactis* subsp. *cremoris,* lactococcin A, lactococcin G, lactostrepcin, and diplococcin by *Lactococcus lactis* subsp. *cremoris,* and bacteriocin S50 by *Lactococcus lactis* subsp. *diacetilactis.*

Some examples of bacteriocin produced by strains of lactic acid bacteria in the genus *Pediococcus* are: pediocin AcH by *Pediococcus acidilactici* H, pediocin PA1 by *Pediococcus acidilactici* PAC1.0, and pediocin A by *Pediococcus pentosaceous* FBB61.

Some examples of bacteriocin produced by strains of lactic acid bacteria in the genus *Lactobacillus* are: lacticin 27 by *Lactobacillus helveticus* LP27, acidocin 8912 by *Lactobacillus acidophilus* TK8912, plantaricin A by *Lactobacillus plantarum* C-11, bacteriocin by *Lactobacillus piscicola* LV17, reuterin by *Lactobacillus reuteri,* gassericin A by *Lactobacillus gasseri* LA-39, gassericin T by *Lactobacillus gasseri* SBT2055, and salivaricin K21 by *Lactobacillus salivarius* AC21.

Some examples of bacteriocin produced by strains of lactic acid bacteria in the genus *Leuconostoc* are: leuconocin S by *Leuconostoc paramesenteroides,* leuconocin A-ULA187 by *Leuconostoc gelidum* UAL187, and mesenterocin 5 by *Leuconostoc mesenteroides.*

Some examples of bacteriocin produced by strains of lactic acid bacteria in the genus *Propionibacterium* are: jenseniin G by *Propionibacterium jensenii* P126, propionicin PLG-1 by *Propionibacterium thoenii* P127, and microguard by *Propionibacterium freudenreichii* subsp. *shermanii.*

Some examples of bacteriocin-producing bacteira in the genus *Bifidobacterium* are: *Bifidobacterium longum, Bifidobacterium breve, Bifidobacterium bifidum, Bifidobacterium infantis, Bifidobacterium adolescentis, Bifidobacterium pseudocatenulatum,* and *Bifidobacterium catenulatum.*

An example of bacteriocin produced by stains in the genus *Enterococcus* is the one produced by *Enterococcus* sp. GM005.

Bacteriocin-producing lactic acid bacteria in this invention can be cultured according to known methods. MRS media and GYP media generally used for the culture of lactic acid bacteria can be applied. Media containing skimmed milk and beer yeast extract are also applicable. The culture temperature should be 20 - 45 °C, and preferably 25 - 35 °C. The culture time should be approximately 8 - 24 hours. The cell growth can be monitored by measuring the absorbance in the culture media at 660 nm. The final acidity in the culture media should be 0.5 - 2.0%.

The spent culture medium can be directly added to a yoghurt mix, or can be added after heat-killing the bacteria in it. The latter is outside the scope of the invention. The one with cells being removed by centrifugation after heat-killing (bacteriocin outside cells) as well as lactic acid bacteria themselves (bacteriocin inside cells) can be added to a yoghurt mix. The culture of lactic acid bacteria can also be applied to a yoghurt mix. Cells of lactic acid bacteria should be homogenized in the yoghurt mix by being shaken after the addition of the cells. The yoghurt mix can be placed still after the addition of lactic acid bacteria to it, so that the production of bacteriocin proceeds. The production of bacteriocin should be accelerated by properly shaking the yoghurt mix. In the case that bacteriocin is contained in the culture of lactic acid bacteria, the immediate heat-killing is possible.

Secondly, the process for heat-killing the bacteriocin-producing lactic acid bacteria is to be explained (Step 102).

This step can be omitted in the case that the culture is added to a yoghurt mix after being heat-killed although this is outside the scope of the present invention. When the cells are heat-killed at 100 - 140 °C, the time should be 1 second to 1 minute. The preferable heat-killing conditions in this invention are: 85 - 97 °C or 90 - 96 °C, and 2 - 10 minutes. Other preferable heat-killing conditions in this invention are: 110 - 130 °C or 120 - 130 °C, and 1 - 30 seconds. Lactic acid bacteria would be killed with the antibacterial activity of bacteriocin remaining by the treatment under these conditions. By killing the bacteriocin-producing lactic acid bacteria, the increase of flavors such as cheese-like ones attributable to these bacteria, which are incompatible with the flavor of yoghurt, can be restricted. The heat-killing processes can be performed with a general heat-killing apparatus. The heat-killing processes can be conducted at 1 atm., and in the case that they are conducted at 2 - 10 atm., a delicate mouthfeel can be obtained.

Thirdly, the process of adding a starter to the yoghurt mix, in which bacteriocin-producing lactic acid bacteria have been killed (Step 103) is to be explained.

Known starters can be applied as "a starter". Preferable ones among lactic acid bacteria starters can be listed as: *L. bulgaricus, S. thermophilus, L. lactis, L. gasseri,* strains in the genus *Bifidobacterium,* and lactic acid bacteria and yeasts generally used for manufacturing fermented milk, or the mixtures of more than one strains from these. Among these, starters whose main components are the mixture of *L. bulgaricus* and *S. thermophilus*, both of which are the standards of the Codex Standard, are preferable. Other lactic acid bacteria, such as *L. gasseri* and *Bifidobacterium* can be used as the base of the yoghurt starter, depending on the characteristics of the desired fermented milk. The amount of starters can be properly set to the ones adopted in the manufacture of known fermented milk. Inoculation of starters can be conducted according to known methods used in the manufacture of fermented milk.

The preferable pattern in the method for manufacturing fermented milk in this invention is the one designed to employ *Lactobacillus delbrueckii* subsp. *bulgaricus* as the main strain in the starter. In the case that *Lactobacillus delbrueckii* subsp. *bulgaricus* is selected as a starter, the acidity increases during transportation and storage. Therefore, the manufacturing method in this invention can be effectively applied to the manufacture of fermented milk, especially when *L. bulgaricus* is employed as a starter. The manufacturing method of this pattern can be a combination of any patterns of the manufacturing processes described above. Meanwhile, the preferable pattern in the method for manufacturing fermented milk in this invention is the one designed to employ *Lactobacillus helveticuc* and *Lactococcus acidophilus* as the main strains in the starter. Further, the preferable pattern in the method for manufacturing fermented milk in this invention relates to the one designed to employ *Lactobacillus delbrueckii* subsp. *bulgaricus* and *Streptococcus thermophilus* as the main strains in the starter. Namely, in the case that the starters containing *Lactobacillus delbrueckii* subsp. *bulgaricus* and *Streptococcus thermophilus* are employed for fermentation, the acidity increases during transportation and storage. The use of the manufacturing method in this invention leads to the effective restriction of the acidity increase in fermented milk, and consequently the offering of the fermented milk with a good flavor is possible.

Next, the process of fermenting the yoghurt mix, to which a starter has been added (Step 104) is to be explained.

The fermentation conditions, such as the temperature, can be arranged considering the strains of lactic acid bacteria added to a yoghurt mix, the desired flavors of fermented milk, and such. One concrete example for the fermentation temperatureis 30 - 50 °C. At these temperatures, lactic acid bacteria are generally active and the fermentation effectively proceeds. As the temperature range, 40 - 45 °C is preferable and 41 - 45 °C is more preferable. To deactivate the starter, fermentation can be conducted at lower temperatures. One concrete example is 40 - 43 °C.

The fermentation time can be set depending on the situation and for example, 1 - 6 hours and 2 - 4 hours are acceptable.

For example, in the case of post-fermentation, the mixture of a yoghurt mix and a starter is first poured in a container, which then is put in a fermentation room at a fixed temperature for fixed time to ferment the resultant yoghurt mix. By these procedures, fermented milk is obtained.

The preferable pattern in the method for manufacturing fermented milk in this invention relates to the one in which fermented milk is plain-type yoghurt. This invention is preferably applied to the manufacture of plain-type yoghurt and not to the one containing sugar syrup and sarcocarp. For example, set-type is preferable. Generally, plain-type yoghurt is set-type (hard-type) and the manufacturing method in this invention is preferably applicable to set-type (hard-type) yoghurt, and not to soft-type or drink-type ones.

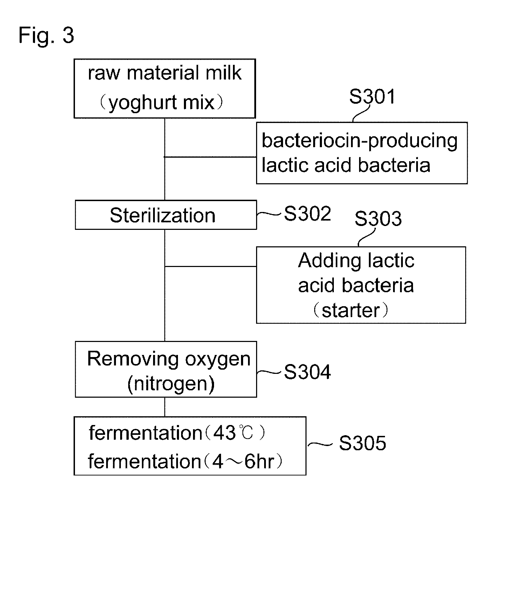

Figure 3 shows a preferable pattern in this investigation for the manufacture of fermented milk. The method for manufacturing fermented milk in this invention basically relates to the one designed to contain the processes of de-oxygen treatment of the yoghurt mix between the ones to kill bacteriocin-producing lactic acid bacteria (Step 102) and to ferment the yoghurt mix (Step 104) as shown in Figure 1. By the de-oxygen treatment, as shown in Example, the activity of the starter is enhanced, accelerating the fermentation. Concretely, fermented milk is manufactured as follows. Lactic acid bacteria and/or cultures or fermentation products thereof are added to a yoghurt mix (Step 301) (Shown as "addition of bacteriocin-producing lactic acid bacteria and such" in Figure 3.), wherein the bacteria in S301 are bacteriocin-producing lactic acid bacteria. After this, the treatment to kill the bacteriocin-producing lactic acid bacteria is performed (Step 302), whereby an increase of the cheese-like flavor caused by the bacteriocin-producing lactic acid bacteria is ceased. Meanwhile, fermentation does not proceed by dead lactic acid bacterial cells alone. To solve this, a starter is inoculated into the yoghurt mix in which the bacteriocin-producing lactic acid bacteria have been killed (Step 303). After the oxygen in the yoghurt mix with a starter is removed (Step 304), the yoghurt mix is fermented (Step 305). The procedures mentioned above can be adopted to these steps.

In the following, the process of removing oxygen from the yoghurt mix containing a starter (Step 304) is to be explained.

In the process of removing oxygen, general apparatuses to exchange the dissolved oxygen with inactive gas can be applied. Concretely, apparatuses disclosed in JP2001-78665A, JP2001-9206A, or JP2005-110527A, for example, can be applied to exchanging oxygen gas with inactive gas.

JP2001-78665A discloses the following apparatus. Namely, "a nitrogen-gas-exchange apparatus for milk and such, characterized in: providing the nitrogen-gas-exchanging tank connected to a raw-material tank through a liquid-supplying pipe, and connecting a nitrogen-gas-supplying means to said liquid-supplying pipe on the side of the raw-material tank, and conducting one end of a branching liquid-supplying pipe which is connected to the upper side of the nitrogen-gas-supplying means in the liquid-supplying pipe to inside of the nitrogen-gas-exchange tank with an apparatus to mix and disperse nitrogen gas being installed on the side of said nitrogen-gas-exchange tank, and connecting a spraying nozzle to the parts concerned, and providing the flow-rate-control device to each of said liquid-supplying pipe, the nitrogen-gas-supplying means and the branching connecting-pipe, in the apparatus to exchange remaining oxygen gas in milk and such with nitrogen gas" is disclosed.

JP2001-9206A discloses the following apparatus. Namely, "a multistage de-aerating and de-gassing system characterized in: being supported so that a mixing and dispersing device can rotate on a vertical shaft in a vacuum chamber, and dispersing the treatment solution, which is provided on said mixing and dispersing device rotating at high speed, by the centrifugal force, and deploying said mixing and dispersing devices in a multistage-wise manner in the structure to de-aerate and de-gas bubbles and such in a liquid, and providing the treatment solution to each mixing and dispersing device" is disclosed.

JP2005-110527A discloses the following apparatus. Namely, "a manufacturing machine for beverages equipped with a de-gassing system and a de-aerating system" is disclosed.

"Inactive gas" can be nitrogen gas, or inert gasses, such as helium, neon, argon, and xenon.

Fermented milk manufactured according to any of the methods for the manufacture of fermented milk described above contains bacteriocin as a component. Because of this, the increase of acidity in the fermented milk during transportation and storage can be effectively restricted. In addition, the fermented milk gives good flavors, because excellent lactic acid bacteria such as *Lactobacillus delbrueckii* subsp. *bulgaricus* are applicable as a starter.

In the following, the present invention is to be concretely explained based on Examples. However, the procedures for manufacturing fermented milk are not limited to the ones described in Examples.

A yoghurt mix (fat: 3.0wt%, solid non fat: 9.5wt%) was prepared by mixing and dissolving milk and dairy products. The yoghurt mix was cooled to a fixed temperature after being homogenized and sterilized, and a lactic acid bacteria starter (yoghurt starter) was inoculated, and thus the yoghurt mix was prepared. Lactic acid bacteria in the genus *Lactococcus* (mother starter) were employed and under a variety of manufacturing conditions, yoghurt was preserved at fixed temperatures (5, 10, and 15 °C). The time for fermentation and the change of the flavor were examined based on the increase of acidity in yoghurt during fermentation and storage. The measurement of the acidity was performed by known apparatuses. The measurement of the acidity was performed until the acidity reached approximately 0.60 - 0.75%, and the fermentation time to be required was compared.

### Example 1

### The effect of amounts of Lactococcus lactis subsp. lactis (OLS3311) added.

The effect of amounts added was examined using *Lactococcus lactis* subsp. *lactis* (OLS3311) as a mother starter. The preparation conditions for the mother starter are shown in Table 1. To culture media containing 10wt% skimmed milk and 0.1wt% beer yeast extract, *Lactococcus lactis* subsp. *lactis* (OLS3311) was inoculated to obtain a 1wt% bacterial solution. A mother starter was obtained at 16 hours of fermentation after the inoculation at 30 °C. The final acidity was 0.90%.

**Table 1 Preparation conditions for the mother starter**

| Stock culture | *Lactocossus lactis* subsp. *lactis* (OLS3311) |
|---|---|
| Culture medium | 10wt% skimmed milk and 0.1wt% beer yeast extract |
| Amount inoculated | 1.00wt% |
| Fermentation temperature | 30 °C |
| Fermentation time | 16 hours |
| Final acidity | 0.90% |

In Example 1, yoghurt was manufactured according to the manufacturing procedures shown in Table 2. First, milk (87wt%) was dissolved in water (13wt%) and after heating the solution, skimmed milk (final concentration: 2wt%) was dissolved in it. The mother starter (*Lactococcus lactis* subsp. *lactis* (OLS3311)) was added to the mixture solution to be 1wt% and the resultant mixture solution was sterilized at 95 °C for 2 minutes, and then cooled down to 43 °C. Subsequently, the starter (Meiji Bulgaria Fruit Yoghurt starter) was added to the mixture solution to be 2wt%, which then was fermented at 43 °C. During the fermentation processes, the acidity was measured at certain intervals and the results were obtained as shown in Table 3. The yoghurt manufactured here was preserved at 5, 10, or 15 °C and the change of the flavor (the increase of acidity) during storage was monitored. The results are shown in Tables 4 - 6.

### (Comparison-Example 1)

In Comparison-Example 1, yoghurt, as a control, was manufactured without a mother starter, as shown in Table 2. All procedures were the same as those of Example 1 except that a mother starter was not used in Comparison-Example 1.

### (Comparison -Example 2)

In Comparison-Example 2, yoghurt was manufactured according to the manufacturing procedures shown in Table 2. All procedures were the same as those of Comparison-Example 1 except that a 1wt% mother starter was used, and then the mixture solution was fermented in Comparison-Example 2.

### Example 2

In Example 2, yoghurt was manufactured according to the manufacturing procedures shown in Table 2. Namely, all procedures were the same as those of Example 1 except that a 3wt% mother starter was used in Example 2.

### Example 3

In Example 3, yoghurt was manufactured according to the manufacturing procedures shown in Table 2. Namely, all procedures were the same as those of Example 1 except that a 5wt% mother starter was used in Example 3.

The manufacturing processes in Comparison-Examples 1, 2, and Examples 1 - 3 are summarized in Table 2.

**Table 2 Manufacturing process**

| Process | Comparison-Example 1 | Example 1 | Comparison-Example 2 | Example 2 | Example 3 |
|---|---|---|---|---|---|
| Preparation of a yoghurt mix | 87wt% milk and 13wt% water, heated | | | | |
| | 2wt% skimmed milk, dissolved | | | | |
| Addition of a mother starter | - | 1wt% OLS3311 | - | 3wt% OLS3311 | Swt% OLS3311 |
| Sterilization | 95 °C, 2 minutes | | | | |
| Cooling | 43 °C | | | | |
| Addition of a starter | 2wt% Meiji Bulgaria Fruit Yoghurt starter | | | | |
| Addition of a mother starter | - | - | 1wt% OLS3311 | - | - |
| Fermentation | 43 °C | | | | |

During the fermentation, the change of acidity in yoghurt manufactured according to the manufacturing procedures of Comparison-Examples 1, 2, and Examples 1- 3 was monitored and the results obtained are shown in Table 3. The results revealed that the addition of OLS3311 retarded the fermentation (the increase of acidity) which was indicated from the comparison of the acidity in Comparison-Example 1 and Examples 1 - 3. By comparing the results of Example 1 and Comparison-Example 2, it was revealed that the addition and the subsequent killing of OLS3311 (Example 1) retarded the fermentation (the increase of acidity).

**Table 3 Increase of acidity due to fermentation**

| Time (minute) | Comparison-Example 1 | Example 1 | Comparison-Example 2 | Example 2 | Example 3 |
|---|---|---|---|---|---|
| 150 | 0.56 | - | - | - | - |
| 180 | 0.67 | 0.51 | 0.46 | 0.42 | - |
| 210 | | 0.57 | 0.52 | - | - |
| 240 | | 0.62 | 0.58 | - | - |
| 270 | | 0.64 | 0.62 | 0.60 | 0.62 |
| 300 | | | 0.65 | 0.63 | 0.63 |

During the storage at 5, 10, or 15 °C, the change of acidity of yoghurt manufactured according to the manufacturing procedures of Comparison-Examples 1, 2, and Examples 1 - 3 was monitored and the results obtained are summarized in Tables 4 - 6. The results revealed that the addition of OLS3311 retarded the change of the flavor (the increase of acidity) at each temperature, which was indicated from the comparison of the acidity in Comparison-Example 1 and Examples 1 - 3. By comparing the results of Example 1 and Comparison-Example 2, it was revealed that the addition and the subsequent killing of OLS3311 (Example 1) at each temperature retarded the change of the flavor (the increase of acidity).

**Table 4 Acidity in yoghurt stored at 5 °C**

| Storage (day) | Comparison-Example 1 | Example 1 | Comparison-Example 2 | Example 2 | Example 3 |
|---|---|---|---|---|---|
| 4 | 0.78 | 0.65 | 0.69 | 0.66 | 0.65 |
| 7 | 0.79 | 0.65 | 0.67 | 0.65 | 0.67 |
| 13 | 0.82 | 0.67 | 0.70 | 0.67 | 0.68 |
| 21 | 0.89 | 0.70 | 0.73 | 0.70 | 0.71 |

**Table 5 Acidity in yoghurt stored at 10 °C**

| Storage (day) | Comparison-Example 1 | Example 1 | Comparison-Example 2 | Example 2 | Example 3 |
|---|---|---|---|---|---|
| 4 | 0.83 | 0.65 | 0.69 | 0.66 | 0.67 |
| 7 | 0.89 | 0.67 | 0.69 | 0.67 | 0.68 |
| 13 | 0.91 | 0.70 | 0.73 | 0.69 | 0.69 |
| 21 | 0.99 | 0.75 | 0.81 | 0.74 | 0.75 |

**Table 6 Acidity in yoghurt stored at 15 °C**

| Storage (day) | Comparison-Example 1 | Example 1 | Comparison-Example 2 | Example 2 | Example 3 |
|---|---|---|---|---|---|
| 4 | 0.87 | 0.67 | 0.71 | 0.67 | 0.70 |
| 7 | 1.02 | 0.73 | 0.74 | 0.70 | 0.70 |
| 13 | 1.11 | 0.77 | 0.84 | 0.72 | 0.72 |
| 21 | 1.19 | 0.96 | 0.98 | 0.83 | 0.84 |

### Example 4

### The effect of amounts of the starters added

In Example 4, yoghurt was manufactured according to the manufacturing procedures shown in Table 7. First, milk (87wt%) was dissolved in water (13wt%) and after heating the solution, skimmed milk (final concentration: 2wt%) was dissolved in it. The mother starter (*Lactococcus lactis* subsp. *lactis* (OLS3311)), which was the same one used for Example 1, was added to the solution to be 3wt%. The resultant mixture solution was sterilized at 95 °C for 2 minutes, and then cooled down to 43 °C. Subsequently, the starter (Meiji Bulgaria Fruit Yoghurt starter) was added to the mixture solution to be 2wt%, which then was fermented at 43 °C. During the fermentation processes, the acidity was measured at certain intervals and the results obtained are shown in Table 8. The yoghurt manufactured here was preserved at 5, 10, or 15 °C and the change of the flavor (the increase of acidity) during storage was monitored. The results are shown in Tables 9-11.

### (Comparison-Example 1)

In Comparison-Example 1, yoghurt, a control, was manufactured according to the manufacturing procedures shown in Table 7. Namely, all procedures were the same as those of Example 4 except that the sterilization was conducted immediately after dissolving skimmed milk here.

### Example 5

In Example 5, yoghurt was manufactured according to the manufacturing procedures shown in Table 7. Namely, all procedures were the same as those of Example 4 except that a 3wt% starter was used in Example 5.

### Example 6

In Example 6, yoghurt was manufactured according to the manufacturing procedures shown in Table 7. Namely, all procedures were the same as those of Example 4 except that a 4wt% starter was used in Example 6.

### Example 7

In Example 7, yoghurt was manufactured according to the manufacturing procedures shown in Table 7. Namely, all procedures were the same as those of Example 4 except that a 5wt% starter was used in Example 7.

The manufacturing processes in Comparison-Example 1 and Examples 4 - 7 are summarized in Table 7.

**Table 7 Manufacturing process**

| Process | Comparison-Example 1 | Example 4 | Example 5 | Example 6 | Example 7 |
|---|---|---|---|---|---|
| Preparation of a yoghurt mix | 87wt% milk and 13wt% water, heated | | | | |
| | 2wt% skimmed milk, dissolved | | | | |
| Addition of a mother starter | - | 3wt% OLS3311 | 3wt% OLS3311 | 3wt% OLS3311 | 3wt% OLS3311 |
| Sterilization | 95 °C, 2 minutes | | | | |
| Cooling | 43 °C | | | | |
| Addition of a starter | 2wt% | 2wt% | 3wt% | 4wt% | 5wt% |
| Fermentation | 43 °C | | | | |

During the fermentation, the change of acidity in yoghurt manufactured according to the manufacturing procedures of Comparison-Example 1 and Examples 4 - 7 was monitored and the results obtained are shown in Table 8. The results revealed that the fermentation (the increase of acidity) was accelerated with an increase of amounts of the starters added.

**Table 8 Increase of acidity due to fermentation**

| Time (minute) | Comparison-Example 1 | Example 1 | Comparison-Example 2 | Example 2 | Example 3 |
|---|---|---|---|---|---|
| 150 | 0.56 | - | - | - | 0.53 |
| 180 | 0.67 | 0.45 | 0.51 | 0.55 | 0.59 |
| 210 | | 0.50 | 0.56 | 0.61 | 0.65 |
| 240 | | - | 0.62 | 0.64 | |
| 270 | | 0.61 | 0.66 | | |
| 300 | | 0.64 | | | |

During the storage at 5, 10, or 15 °C, the change of acidity in yoghurt manufactured according to the manufacturing procedures of Comparison-Example 1 and Examples 4 - 7 was monitored and the results obtained are summarized in Tables 9 - 11. The results revealed that the increase of amounts of starters added accelerated the change of the flavor (the increase of acidity).

**Table 9 Acidity in yoghurt stored at 5 °C**

| Storage (day) | Comparison-Example 1 | Example 4 | Example 5 | Example 6 | Example 7 |
|---|---|---|---|---|---|
| 3 | 0.77 | 0.66 | 0.67 | 0.66 | 0.67 |
| 11 | 0.80 | 0.69 | 0.70 | 0.69 | 0.70 |
| 13 | 0.82 | 0.69 | 0.70 | 0.70 | 0.71 |
| 21 | 0.90 | 0.71 | 0.75 | 0.76 | 0.75 |

**Table 10 Acidity in yoghurt stored at 10 °C**

| Storage (day) | Comparison-Example 1 | Example 4 | Example 5 | Example 6 | Example 7 |
|---|---|---|---|---|---|
| 3 | 0.82 | 0.66 | 0.67 | 0.67 | 0.68 |
| 11 | 0.90 | 0.70 | 0.72 | 0.71 | 0.72 |
| 13 | 0.91 | 0.71 | 0.72 | 0.72 | 0.74 |
| 21 | 1.00 | 0.77 | 0.80 | 0.80 | 0.81 |

**Table 11 Acidity in yoghurt stored at 15 °C**

| Storage (day) | Comparison-Example 1 | Example 4 | Example 5 | Example 6 | Example 7 |
|---|---|---|---|---|---|
| 3 | 0.86 | 0.68 | 0.68 | 0.68 | 0.68 |
| 11 | 1.03 | 0.74 | 0.76 | 0.76 | 0.77 |
| 13 | 1.11 | 0.76 | 0.79 | 0.78 | 0.80 |
| 21 | 1.20 | 0.95 | 1.00 | 1.01 | 1.04 |

### Example 8

### The effect of sterilization processes

In Example 8, yoghurt was manufactured according to the manufacturing procedures shown in Table 12. First, milk (87wt%) was dissolved in water (13wt%) and after heating the solution, skimmed milk (final concentration: 2%) was dissolved in it. The mother starter *(Lactococcus lactis* subsp. *lactis* (OLS3311)), which was the same one used for Example 1, was dissolved in the mixture solution to be 3wt%. The resultant mixture solution was sterilized at 95 °C for 2 minutes in a hot water bath, and then cooled down to 43 °C. Subsequently, the starter (Meiji Bulgaria Fruit Yoghurt starter) was added to the mixture solution to be 2wt%, which then was fermented at 43 °C. During the fermentation processes, the acidity of the mixture solution was measured at certain intervals and the results obtained are shown in Table 13. The yoghurt manufactured here was preserved at 5, 10, or 15 °C and the change of the flavor (the increase of acidity) during storage was monitored. The results obtained are shown in Tables 14 - 16.

### Example 9

In Example 9, yoghurt was manufactured according to the manufacturing procedures shown in Table 12. Namely, all procedures were the same as those of Example 8 except that the sterilization was conducted for 10 minutes in Example 9.

### Example 10

In Example 10, yoghurt was manufactured according to the manufacturing procedures shown in Table 12. Namely, all procedures were the same as those of Example 8 except that the sterilization was conducted for 30 minutes in Example 10.

### Example 11

In Example 11, yoghurt was manufactured according to the manufacturing procedures shown in Table 12. Namely, all procedures were the same as those of Example 8 except that the sterilization was conducted for 60 minutes in Example 11.

### Example 12

In Example 12, yoghurt was manufactured according to the manufacturing procedures shown in Table 12. Namely, all procedures were the same as those of Example 8 except that the sterilization was conducted by autoclaving at 110 °C for 1 minute in Example 12.

The manufacturing processes in Example 8 - 12 are summarized in Table 12.

**Table 12 Manufacturing process**

| Process | Example 8 | Example 9 | Example 10 | Example 11 | Example 12 |
|---|---|---|---|---|---|
| Preparation of a yoghurt mix | 87wt% milk and 13wt% water, heated | | | | |
| | 2wt% skimmed milk, dissolved | | | | |
| Addition of a mother starter | 3wt% OLS3311 | | | | |
| Sterilization | 95 °C for 2 minutes, in a hot water bath | 95 °C for 10 minutes, in a hot water bath | 95 °C for 30 minutes, in a hot water bath | 95 °C for 60 minutes, in a hot water bath | 95 °C for 1 minute, autoclaved |
| Cooling | 43 °C | | | | |
| Addition of a starter | 2wt% Meiji Bulgaria Fruit Yoghurt starter | | | | |
| Fermentation | 43 °C | | | | |

During the fermentation, the change of acidity in yoghurt manufactured according to the manufacturing procedures of Examples 8 - 12 was monitored and the results obtained are shown in Table 13. The results revealed that the fermentation (the increase of acidity) was accelerated with an increase of the sterilization time, and even with a short time of sterilization, the fermentation (the increase of acidity) was accelerated if the sterilization temperature was high.

**Table 13 Increase of acidity due to fermentation**

| Time (minute) | Example 8 | Example 9 | Example 10 | Example 11 | Example 12 |
|---|---|---|---|---|---|
| 180 | 0.45 | 0.46 | 0.50 | 0.66 | 0.49 |
| 210 | - | - | 0.55 | | 0.54 |
| 270 | 0.61 | 0.60 | 0.65 | | 0.64 |
| 300 | 0.63 | 0.64 | | | |
| 330 | 0.65 | | | | |

During the storage at 5, 10, or 15 °C, the change of acidity in yoghurt manufactured according to the manufacturing procedures of Examples 8 - 12 was monitored and the results obtained are summarized in Tables 14 - 16. As a result, no difference was observed in the change of the flavor (the increase of acidity) among Examples 8 - 10 and 12. On the other hand, the change of the flavor (the increase of acidity) was quicker in Example 11 compared with Examples 8 - 10, and 12. This result was similar to the one obtained in the absence of OLS3311, leading to the idea that bacteriocin produced by OLS3311 was possibly deactivated under the sterilization condition in Example 11 (95 °C, 60 minutes, in a hot water bath).

**Table 14 Acidity in yoghurt stored at 5 °C**

| Storage (day) | Example 8 | Example 9 | Example 10 | Example 11 | Example 12 |
|---|---|---|---|---|---|
| 3 | 0.67 | 0.66 | 0.66 | 0.70 | 0.65 |
| 6 | 0.67 | 0.68 | 0.66 | 0.71 | 0.66 |
| 14 | 0.72 | 0.69 | 0.68 | 0.74 | 0.67 |
| 21 | 0.73 | 0.73 | 0.73 | 0.78 | 0.72 |

**Table 15 Acidity in yoghurt stored at 10 °C**

| Storage (day) | Example 8 | Example 9 | Example 10 | Example 11 | Example 12 |
|---|---|---|---|---|---|
| 3 | 0.67 | 0.68 | 0.68 | 0.70 | 0.66 |
| 6 | 0.69 | 0.69 | 0.68 | 0.73 | 0.68 |
| 14 | 0.73 | 0.73 | 0.74 | 0.82 | 0.72 |
| 21 | 0.76 | 0.77 | 0.76 | 0.88 | 0.76 |

**Table 16 Acidity in yoghurt stored at 15 °C**

| Storage (day) | Example 8 | Example 9 | Example 10 | Example 11 | Example 12 |
|---|---|---|---|---|---|
| 3 | 0.67 | 0.68 | 0.68 | 0.74 | 0.68 |
| 6 | 0.71 | 0.70 | 0.70 | 0.81 | 0.70 |
| 14 | 0.78 | 0.79 | 0.79 | 1.05 | 0.79 |
| 21 | 0.92 | 0.91 | 0.90 | 1.17 | 0.90 |

### Example 13

### The effect of amounts of Lactococcus lactis subsp. cremoris (OLS3312) added and the cooling method applied

The effect of amounts of *Lactococcus lactis* subsp. *cremoris* (OLS3312) added as a mother starter and the cooling method on the increase of acidity was examined. The conditions for preparation of the mother starter are shown in Table 17. To culture media containing 10wt% skimmed milk and 0.1wt% beer yeast extract, *Lactococcus lactis* subsp. *cremoris* (OLS3312) was inoculated to be 0.5wt%. After inoculation, the culture was fermented at 30 °C for 20 hours, which was then used as the mother starter. The final acidity and the final pH were 0.75% and 4.58, respectively.

**Table 17 Preparation conditions for the mother starter**

| Stock culture | *Lactococcus lactis* subsp. *cremoris* (OLS3312) |
|---|---|
| Culture medium | 10wt% skimmed milk and 0.1wt% beer yeast extract |
| Amount inoculated | 0.50wt% |
| Fermentation temperature | 30 °C |
| Fermentation time | 20 hours |
| Final acidity | 0.75% |
| Final pH | 4.58 |

In Example 13, yoghurt was manufactured according to the manufacturing procedures shown in Table 18. First, water was heated and skimmed milk (final concentration: 10wt%) was dissolved in it. The mother starter (*Lactococcus lactis* subsp. *cremoris* (OLS3312)) was added to the mixture solution to be 1.2wt%, and the resultant mixture solution was sterilized at 95 °C for 2 minutes, and then cooled down to 43 °C. Subsequently, the starter (Meiji Bulgaria Yoghurt starter (plain-type)) was added to the mixture solution to be 2wt%, which then was fermented at 43 °C. During the fermentation processes, the acidity was measured at certain intervals and the results obtained are shown in Table 19. The yoghurt manufactured here was preserved at 5, 10, or 15 °C and the change of the flavor (the increase of acidity) during storage was monitored.

The results obtained at 10 °C are shown in Table 20.

### (Comparison-Example 3)

In Comparison-Example 3, yoghurt was manufactured as a control according to the manufacturing procedures shown in Table 18. All procedures were the same as those of Example 13 except that the mother starter was not used and the mixture solution was sterilized immediately after skimmed milk had been dissolved in the case of Comparison-Example 3.

### Example 14

In Example 14, yoghurt was manufactured according to the manufacturing procedures shown in Table 18. Namely, all procedures were the same as those of Example 13 except that the fermentation was conducted after cooling the mixture solution to 43 °C and performing the de-oxygen treatment (nitrogen treatment) in Example 14.

### Example 15

In Example 15, yoghurt was manufactured according to the manufacturing procedures shown in Table 18. Namely, all procedures were the same as those of Example 13 except that the starter was added to be 1.5wt% in Example 15.

### Example 16

In Example 16, yoghurt was manufactured according to the manufacturing procedures shown in Table 18. Namely, all procedures were the same as those of Example 13 except that the starter was added to the mixture solution to be 1.5wt% and the resultant mixture solution was cooled down to 43 °C and, after the de-oxygen treatment (nitrogen treatment), the fermentation was conducted in the case of Example 16.

The manufacturing processes in Example 13 - 16 are summarized in Table 18.

**Table 18 Manufacturing process**

| Process | Comparison-Example 3 | Example 13 | Example 14 | Example 15 | Example 16 |
|---|---|---|---|---|---|
| Preparation of a yoghurt mix | Hot water, heated | | | | |
| | 10wt% skimmed milk, dissolved | | | | |
| Addition of a mother starter | - | 1.2wt% OLS3312 | 1.2wt% OLS3312 | 1.5wt% OLS3312 | 1.5wt% OLS3312 |
| Sterilization | 95 °C | | | | |
| Cooling | 43 °C | 43 °C | 43 °C | 43 °C | 43 °C |
| Addition of a starter | 2wt% Meiji Bulgaria Fruit Yoghurt starter | | | | |
| De-oxygen process | - | - | Nitrogen treatment | - | Nitrogen treatment |
| Fermentation | 43 °C | | | | |

The change of acidity in yoghurt in Comparison-Example 3 and Examples 13 - 16 during fermentation, which was manufactured according to the manufacturing procedures was monitored and the results obtained are summarized in Table 19. The results revealed that the addition of OLS3312 retarded the fermentation (the increase of acidity), which was indicated from the comparison of the acidity in them. By comparing the results of Examples 13 and 15, it was revealed that the larger addition of OLS3312 lead to the larger retardation of the fermentation (the increase of acidity). By the comparison between the results of Examples 13 and 14, and between those of Examples 15 and 16, it was shown that the fermentation (the increase of acidity) was accelerated when the de-oxygen treatment (nitrogen treatment) was performed in the manufacturing processes and the fermentation was performed in the absence of oxygen. From these results, it was demonstrated that the activity of the products from *Lactococcus lactis* subsp. *cremoris* (OLS3312) could be increased and the fermentation time could be shortened by arranging the amount of mother starters added and the de-oxygen treatment (nitrogen treatment).

**Table 19 Increase of acidity due to fermentation**

| Time (hour) | Comparison-Example 3 | Example 13 | Example 14 | Example 15 | Example 16 |
|---|---|---|---|---|---|
| 0.0 | 0.15 | 0.15 | 0.15 | 0.15 | 0.15 |
| 1.5 | 0.21 | 0.20 | 0.23 | 0.18 | 0.20 |
| 2.5 | 0.50 | 0.45 | 0.55 | 0.33 | 0.42 |
| 3.0 | 0.66 | 0.60 | 0.68 | 0.49 | 0.57 |
| 3.5 | 0.75 | 0.68 | 0.74 | 0.61 | 0.67 |
| 4.0 | | 0.75 | | 0.69 | 0.74 |
| 4.5 | | | | 0.74 | |

The change of acidity in yoghurt during storage at 10 °C, which was manufactured according to the manufacturing procedures of Comparison-Example 3 and Examples 13 - 16, was monitored and the results are summarized in Table 20. As a result, it was revealed that the change of the flavor (the increase of acidity) in Examples 13 - 16 was slower compared with that in Comparison-Example 3. By comparing the results of Examples 13 and 15, it was shown that an increase of the amount of OLS3312 added retarded the change of the flavor (the increase of acidity). By the comparison between the results of Examples 13 and 14, and between those of Examples 15 and 16, it was shown that the change of the flavor due to fermentation was not significantly different among them in the absence of oxygen.

**Table 20 Increase of acidity due to fermentation**

| Time (day) | Comparison-Example 3 | Example 13 | Example 14 | Example 15 | Example 16 |
|---|---|---|---|---|---|
| 10 | 1.05 | 1.02 | 1.02 | 0.96 | 0.96 |
| 17 | 1.10 | 1.06 | 1.06 | 1.00 | 1.01 |

### Example 17

### The effect of starters.

Mother starters were prepared from *Lactococcus lactis* subsp. *cremoris* (OLS3312) applied to two kinds of culture media. Concretely, in one medium (skimmed milk medium), 10wt% skimmed milk and 0.1wt% beer yeast extract were contained, and in the other (M17 medium), M17 (Difco) and 0.5wt% lactose were contained. The preparation conditions for the mother starters are shown in Figure 21. In the case of using the skimmed milk medium, *Lactococcus lactis* subsp. *cremoris* (OLS3312) was added to the medium to be 0.50wt% and the fermentation in the resultant medium was conducted at 30 °C for 20 hours. The acidity at the end of the fermentation was 0.73%. For the M17 media, *Lactococcus lactis* subsp. *cremoris* (OLS3312) was added to the medium to be 0.25wt% and the fermentation in the resultant medium was conducted at 30 °C for 16 hours. The absorbance at the end of the fermentation was 1.71 (OD 660).

**Table 21 Preparation conditions for the mother starter**

| Stock culture | *Lactococcus lactis* subsp. *cremoris* (OLS3312) | |
|---|---|---|
| Culture medium | 10wt% skimmed milk and 0.1wt% beer yeast extract | Difco M17 and 0.5wt% lactose |
| Amount inoculated | 0.50wt% | 0.25wt% |
| Fermentation temperature | 30 °C | |
| Fermentation time | 20 hours | 16 hours |
| Final acidity | 0.73% | - |
| Final pH | - | 1.71 |

In Example 17, yoghurt was manufactured according to the manufacturing procedures shown in Table 22. First, water was heated and skimmed milk (final concentration: 10wt%) was dissolved in it. The mother starter, *Lactococcus lactis* subsp. *cremoris* (OLS3312), prepared in the M17 medium, was added to the skimmed milk solution to be 2wt%, and the resultant mixture solution was sterilized at 95 °C for 2 minutes, and then cooled down to 43 °C. Subsequently, the starter (Meiji Bulgaria Yoghurt starter, (plain-type)) was added to this mixture solution to be 2wt%, which then was fermented at 43 °C. During the fermentation processes, the acidity was measured at certain intervals and the results obtained are shown in Table 23.

### (Comparison-Example 4)

In Comparison-Example 4, yoghurt was manufactured according to the manufacturing procedures shown in Table 22. Namely, all procedures were the same as those of Example 17 except that the mother starter was not used in Comparison-Example 4.

### (Comparison-Example 5)

In Comparison-Example 5, yoghurt was manufactured according to the manufacturing procedures shown in Table 22. Namely, all procedures were the same as those of Comparison-Example 4 except that the mother starter (2wt% of the supernatant of OLS3312) prepared in the M17 medium was added after the addition of the starter in the case of Comparison-Example 5.

### Example 18

In Example 18, yoghurt was manufactured according to the manufacturing procedures shown in Table 22. Namely, all procedures were the same as those of Example 17 except that the mother starter (OLS3312) prepared in the skimmed milk medium was added in the case of Example 18.

The manufacturing processes in Comparison-Examples 4 and 5, and Examples 17 and 18 are summarized in Table 22.

**Table 22 Manufacturing process**

| Process | Comparison-Example 4 | Example 17 | Comparison-Example 5 | Example 18 |
|---|---|---|---|---|
| Preparation of a yoghurt mix | Water, heated | | | |
| | 10wt% skimmed milk, dissolved | | | |
| Addition of a mother starter (spent medium) | - | 2wt% OLS3312 (M17 medium) | - | 2wt% OLS3312 (skimmed milk medium) |
| Sterilization | 95 °C | | | |
| Cooling | 43 °C | | | |
| Addition of a starter | 2wt% Meiji Bulgaria Yoghurt starter, (Plain-type) | | | |
| Addition of a mother starter (spent medium) | - | - | 2wt% supernatant of OLS3312 (M17 medium) | - |
| Fermentation | 43 °C | | | |

The change of acidity in yoghurt during fermentation, which was manufactured according to the manufacturing procedures of Comparison-Examples 4 and 5, and Examples 17 and 18, was monitored and the results obtained are summarized in Table 23. The results revealed that the addition of OLS3312 retarded the fermentation (the increase of acidity), which was indicated from the comparison of the acidity in them. By comparing the results from the procedures wherein the bacteria were killed after OLS3312 was added (Example 17) and the ones wherein OLS3312 was added after the bacteria were killed (Comparison-Example 5), it was revealed that the fermentation (the increase of acid) in Example 17 was slightly faster. Comparing the media for preparing the mother starters (Examples 17 and 18), the fermentation (the increase of acidity) was slightly faster in the M17 media than the skimmed milk media. From these results, it was demonstrated that the activity of the products from *Lactobacillus delbrueckii* subsp. *cremoris* could be increased and the fermentation time could be shortened by arranging the amount of mother starters added.

**Table 23 Increase of acidity due to fermentation**

| Time (minute) | Comparison-Example 4 | Example 17 | Comparison-Example 5 | Example 18 |
|---|---|---|---|---|
| 90 | 0.23 | 0.14 | 0.15 | 0.16 |
| 150 | 0.55 | 0.20 | 0.17 | 0.23 |
| 180 | 0.65 | - | - | - |
| 210 | 0.75 | 0.42 | 0.35 | 0.36 |
| 285 | | 0.56 | 0.52 | 0.52 |
| 360 | | 0.65 | 0.61 | 0.61 |

### Comparative Example 19

### Examination on the restriction of the increase of acidity by bacteriocin-producing bacteria

Inhibitory effects of *Lactococcus lactis* subsp. *cremoris* (OLS3312) on the growth of *Lactobacillus* bacteria (*L. helveticus, L. delbrueckii* subsp. *lactis,* and *L. acidophilus*) widely utilized in the manufacture of fermented milk were examined by inoculating the bacterial cells of *Lactococcus lactis* subsp. *cremoris* OLS3312 into their cultures.

Each starter of the above three strains of *Lactobacillus* bacteria and *Lactococcus lactis* subsp. *cremoris* (OLS3312) were added to 80 ml of 10wt% skimmed milk media to be 1wt% and 0.4wt%, respectively. After culturing at 43 °C for 16 hours, the media were cooled down to 5 °C and their acidity was measured. The progress of the fermentation (the degree of acidity) was compared between the pure culture of *Lactobacillus* ("in the absence of OLS3312") and the mixed culture with *Lactococcus lactis* subsp. *cremoris* (OLS3312) ("in the presence of OLS3312"). The results are shown in Table 24.

The results shown in Table 24 indicates that all strains of *Lactobacillus* inhibited the production of acid, with some differences in the inhibitory effects among them. From this, the effectiveness of bacteriocin on *Lactobacillus* bacterial strains other than *Lactobacillus delbrueckii* subsp. *bulgaricus* was also suggested.

**Table 24 Comparison of fermentation**

| Strain | Strain number | Acidity (%) in the presence ofOLS3312 | Acidity (%) in the absence of OLS3312 | Inhibition by OLS3312 (%) |
|---|---|---|---|---|
| *L. helveticus* | A | 0.88 | 1.91 | 46.1 |
| | B | 1.45 | 2.00 | 72.5 |
| *L. acidophilus* | C | 0.76 | 1.01 | 75.2 |
| | D | 0.54 | 1.30 | 41.5 |
| *L. delbrueckii* subsp. *lactis* | E | 0.65 | 0.92 | 70.7 |

### Industrial Applicability

This invention relates to the manufacturing method of fermented milk and can be used in the field of food industry.

## Claims

1. A method for manufacturing fermented milk comprising:
a step of adding
(i) a first bacteria;
(ii) cultures of the bacteria;
(iii) the first bacteria and cultures of the bacteria; or
(iv) the first bacteria and fermentation products of the bacteria
to a yoghurt mix;
a subsequent step of killing the first bacteria;
a step of adding a starter to the yoghurt mix containing the first bacteria which have been killed; and
a step of fermenting the yoghurt mix to which the starter has been added, wherein the first bacteria is bacteriocin-producing lactic acid bacteria in genus *Lactococcus,* and wherein the step of killing the first bacteria is a step of heating the yogurt mix at from 85-97°C for 2-10 minutes or at from 100-140°C for 1 second to 1 minute.

2. The method for manufacturing fermented milk in accordance with claim 1, further comprising a step of de-oxygen treatment of the yoghurt mix between the step of killing the first bacteria and the step of fermenting the yoghurt mix.

3. The method for manufacturing fermented milk in accordance with claim 1, wherein the acidity in the yoghurt mix to which the first bacteria are added is pH 6.5 - 7.5.

4. The method for manufacturing fermented milk in accordance with claim 1, wherein the first bacteria is *Lactococcus lactis* or *Lactococcus lactis subsp. cremoris.*

5. The method for manufacturing fermented milk in accordance with claim 1, wherein the first bacteria is a lactic acid stock with the deposit number "FERM BP-10966" or "FERM BP-10967" deposited in International Patent Organism Depositary, Advanced Industrial Science and Technology.

6. The method for manufacturing fermented milk in accordance with claim 1, wherein the bacteriocin is nisin or lactococcin.

7. The method for manufacturing fermented milk in accordance with claim 1, wherein the main component of the starter is *Lactobacillus. delbrueckii* subsp. *bulgaricus* or *Lactobacillus. helveticus.*

8. The method for manufacturing fermented milk in accordance with claim 1, wherein the main components of the starter are *Lactobacillus. delbrueckii* subsp. *bulgaricus* and *Streptococcus thermophilus.*

9. The method for manufacturing fermented milk in accordance with claim 1, wherein the fermented milk is plain-type yoghurt.

10. The method for manufacturing fermented milk in accordance with any preceding claim, wherein the step of killing the first bacteria is a step of heating the yogurt mix at from 90-96°C for 2-10 minutes or at from 110-130°C for 1-30 seconds.

## Patentansprüche

1. Verfahren zur Erzeugung von fermentierter Milch, umfassend:
einen Schritt des Zugebens
(i) erster Bakterien;
(ii) Kulturen der Bakterien;
(iii) der ersten Bakterien und Kulturen der Bakterien; oder
(iv) der ersten Bakterien und Fermentationsprodukte der Bakterien,
zu einem Joghurtgemisch;
einen anschließenden Schritt des Abtötens der ersten Bakterien;
einen Schritt des Zugebens eines Starters zu dem Joghurtgemisch, der die ersten Bakterien enthält, welche abgetötet worden sind; und
einen Schritt des Fermentierens des Joghurtgemischs, dem der Starter zugesetzt worden ist, wobei die ersten Bakterien Bacteriocin-produzierende Milchsäurebakterien der Gattung *Lactococcus* sind, und wobei der Schritt des Abtötens der ersten Bakterien ein Schritt des Erhitzens des Joghurtgemischs bei 85-97°C für 2-10 Minuten oder bei 100-140°C für 1 Sekunde bis 1 Minute ist.

2. Verfahren zur Erzeugung von fermentierter Milch gemäß Anspruch 1, welches außerdem einen Schritt der Entoxygenierungsbehandlung des Joghurtgemischs zwischen dem Schritt des Abtötens der ersten Bakterien und dem Schritt des Fermentierens des Joghurtgemischs umfasst.

3. Verfahren zur Erzeugung von fermentierter Milch gemäß Anspruch 1, wobei die Azidität in dem Joghurtgemisch, dem die ersten Bakterien zugesetzt werden, pH 6,5-7,5 beträgt.

4. Verfahren zur Erzeugung von fermentierter Milch gemäß Anspruch 1, wobei die ersten Bakterien *Lactococcus lactis* oder *Lactococcus lactis subsp. cremoris* sind.

5. Verfahren zur Erzeugung von fermentierter Milch gemäß Anspruch 1, wobei die ersten Bakterien ein Milchsäure-Vorratsstamm mit der Hinterlegungsnummer "FERM BP-10966" oder "FERM BP-10967", hinterlegt im International Patent Organism Depositary, Advances Industrial Science and Technology, sind.

6. Verfahren zur Erzeugung von fermentierter Milch gemäß Anspruch 1, wobei das Bacteriocin Nisin oder Lactococcin ist.

7. Verfahren zur Erzeugung von fermentierter Milch gemäß Anspruch 1, wobei die Hauptkomponente des Starters *Lactobacillus delbrueckii* subsp. *bulgaricus* oder *Lactobacillus helveticus* ist.

8. Verfahren zur Erzeugung von fermentierter Milch gemäß Anspruch 1, wobei die Hauptkomponente des Starters *Lactobacillus delbrueckii* subsp. *bulgaricus* oder *Streptococcus thermophilus* ist.

9. Verfahren zur Erzeugung von fermentierter Milch gemäß Anspruch 1, wobei die fermentierte Milch Naturjoghurt ist.

10. Verfahren zur Erzeugung von fermentierter Milch gemäß einem der vorangehenden Ansprüche, worin der Schritt des Abtötens der ersten Bakterien ein Schritt des Erhitzens des Joghurtgemischs bei 90-96°C für 2-10 Minuten oder bei 110-130°C für 1-30 Sekunden ist.

## Revendications

1. Procédé de fabrication de lait fermenté, comprenant :
une étape consistant à ajouter :
(i) une première bactérie ;
(ii) des cultures de la bactérie ;
(iii) la première bactérie et des cultures de la bactérie ; ou
(iv) la première bactérie et des produits de fermentation de la bactérie
à un mélange de yaourt ;
une étape successive consistant à détruire la première bactérie ;
une étape consistant à ajouter un levain à un mélange de yaourt contenant la première bactérie qui a été détruite ; et
une étape consistant à faire fermenter le mélange de yaourt auquel le levain a été ajouté, dans lequel la première bactérie est une bactérie d'acide lactique produisant de la bactériocine du genre Lactococcus, et dans lequel l'étape de destruction de la première bactérie est une étape consistant à faire chauffer le mélange de yaourt à 85-97°C pendant 2-10 minutes ou à 100-140°C pendant 1 seconde à 1 minute.

2. Procédé de fabrication de lait fermenté selon la revendication 1, comprenant en outre une étape de traitement de désoxygénation du mélange de yaourt entre l'étape de destruction de la première bactérie et l'étape de fermentation du mélange de yaourt.

3. Procédé de fabrication de lait fermenté selon la revendication 1, dans lequel l'acidité dans le mélange de yaourt auquel est ajoutée la première bactérie est un pH de 6,5-7,5.

4. Procédé de fabrication de lait fermenté selon la revendication 1, dans lequel la première bactérie est une Lactococcus lactis ou une Lactococcus lactis subsp. cremoris.

5. Procédé de fabrication de lait fermenté selon la revendication 1, dans lequel la première bactérie est une solution mère d'acide lactique avec le numéro de dépôt « FERM BP-10966 » ou « FERM BP-10967 », déposé auprès du Dépositaire d'Organisme de Brevet international, Science Industrielle Avancée et Technologie.

6. Procédé de fabrication de lait fermenté selon la revendication 1, dans lequel la bactériocine est la nisine ou la lactococcine.

7. Procédé de fabrication de lait fermenté selon la revendication 1, dans lequel le principal composant du levain est le Lactobacillus, delbrueckii sous-espèce bulgaricus ou Lactobacillus helveticus.

8. Procédé de fabrication de lait fermenté selon la revendication 1, dans lequel les composants principaux du levain sont le Lactobacillus, delbrueckii sous-espèce bulgaricus et Lactobacillus helveticus.

9. Procédé de fabrication de lait fermenté selon la revendication 1, dans lequel le lait fermenté est un yaourt de type pur.

10. Procédé de fabrication de lait fermenté selon l'une quelconque des revendications précédentes, dans lequel l'étape de destruction de la première bactérie est une étape de chauffage du mélange de yaourt à 90-96°C pendant 2-10 minutes ou à 110-130°C pendant 1-30 secondes.
